# EUROPÄISCHE PATENTSCHRIFT

(11) **EP 0 641 695 B1**
(45) Veröffentlichungstag und Bekanntmachung des Hinweises auf die Patenterteilung: **27.11.1996**
(21) Anmeldenummer: 94111083.5
(22) Anmeldetag: 16.07.1994
(51) Int. Cl.: B60S 1/08

(54) **Optoelektronische Sensoreinrichtung**
Optoelectronic sensor device
Dispositif détecteur optoélectronique

(30) Priorität: 02.09.1993 DE 4329609
(43) Veröffentlichungstag der Anmeldung: 08.03.1995
(73) Patentinhaber: Leopold Kostal GmbH & Co. KG, 58507 Lüdenscheid (DE)
(72) Erfinder: Levers, Jürgen, D-44892 Bochum (DE); Veltum, Christian, D-58644 Iserlohn (DE); Esders, Berthold, D-58579 Schalksmühle (DE)

(56) Entgegenhaltungen:
- DE-C- 3 823 300
- DE-C- 4 202 121
- US-A- 4 701 613

## Beschreibung

Die vorliegende Erfindung geht von einer gemäß dem Oberbegriff des Hauptanspruches konzipierten, zur Erfassung des Benetzungsgrades einer transparenten Scheibe mit z.B. tropfenförmig vorliegendem natürlichen Niederschlag vorgesehenen Sensoreinrichtung aus, die auf optoelektronischer Basis arbeitet.

Derartige Einrichtungen sind insbesondere dafür vorgesehen, um in Abhängigkeit der auf der Windschutzscheibe eines Kraftfahrzeuges befindlichen Niederschlagsmenge ein zugeordnetes Scheibenwischsystem zu beeinflussen.

Durch die DE 33 14 770 C1 ist eine Einrichtung zum Steuern einer motorgetriebenen Scheibenwischeinrichtung bekanntgeworden, bei der über einem an der inneren Oberfläche einer transparenten Scheibe angebrachten Strahlenleitkörper von einem zugeordneten Strahlensender emittierte Strahlen in die transparente Scheibe eingekoppelt und nach mindest einer Reflektion an der äußeren Oberfläche der Scheibe über den Strahlenleitkörper wieder ausgekoppelt und zu einem zugeordneten Strahlenempfänger geleitet werden. Eine solche Sensoreinrichtung muß zwecks Gewährleistung einer einwandfreien Messung insbesondere im Umfeld eines Kraftfahrzeuges mit einer Heizvorrichung ausgerüstet sein.

Eine derartige mit einer Heizvorrichtung ausgerüstete Sensoreinrichtung ist durch die DE 42 02 121 C1 bekanntgeworden. Bei diesem den Oberbegriff des Hauptanspruches bildenden Gegenstand ist mittig im Strahlenleitkörper eine Ausnehmung vorhanden, die zur Aufnahme einer Heizvorrichtung vorgesehen ist. Ein mit dem Gehäuse der Sensoreinrichtung in Verbindung stehendes Trägerteil dient zur Festlegung der mit den Anschlußkontaktteilen des Strahlensenders, des Strahlenempfängers und der Heizvorrichtung in Verbindung stehenden elektrischen Leiterplatte.

Der vorliegenden Erfindung liegt die Aufgabe zugrunde, eine Sensoreinrichtung der eingangs erwähnten Art derart weiterzubilden, so das die notwendige Heizvorrichtung auf besonders einfache und kostengünstige Art und Weise im Umfeld der Sensoreinrichtung installierbar ist.

Erfindungsgemäß wird die Aufgabe durch die im kennzeichnenden Teil des Hauptanspruches angegebenen Merkmale gelöst. Vorteilhaft bei einer derartigen Ausbildung ist, daß die Sensoreinrichtung in funktionell vorprüfbare Baugruppen aufgegliedert ist, die sich einfach und kostengünstig zu einer kompletten Sensoreinrichtung zusammensetzen lassen.

Weitere vorteilhafte Ausgestaltungen des erfindungsgemäßen Gegenstandes sind in den Unteransprüchen angegeben und werden anhand eines in der Zeichnung dargestellten Ausführungsbeispieles näher erläutert. Dabei zeigt
- Fig. 1: eine Vorderansicht einer Sensoreinrichtung nach Fig. 2 und 3 zugehörigen, an einer transparenten Scheibe anzukoppelnenden Strahlenleitkörper
- Fig. 2: die Sensoreinrichtung ohne Strahlenleitkörper im Schnitt gemäß Linie C-D der Fig. 3
- Fig. 3: die Sensoreinrichtung ohne Strahlenleitkörper im Schnitt gemäß Linie A-B der Fig. 2

Wie aus der Zeichnung hervorgeht, weist eine zur Erfassung des Benetzungsgrades einer aus Glas bestehenden transparenten Scheibe mit beispielsweise tropfenförmig vorliegendem natürlichen Niederschlag vorgesehene optoelektronische Sensoreinrichtung im wesentlichen einen Strahlenleitkörper 1 auf, der mittels einer z.B. für IR-Strahlen durchlässigen, der Einfachheit halber nicht dargestellten Klebefolie auf der nicht dem Niederschlag ausgesetzten inneren Oberfläche der ebenfalls nicht dargestellten Scheibe befestigt wird. Bei der Scheibe handelt es sich insbesondere um die Windschutzscheibe eines Kraftfahrzeuges, an der die in einem Gehäuse 2 angeordnete Sensoreinrichtung an exponierte, d.h. die Sicht nicht beeinträchtigender, jedoch für die Erfassung des Niederschlages prädestinierter Stelle vorhanden ist.

Das aus Kunststoff herstellte Gehäuse 2 besteht im wesentlichen aus einem der Scheibe zugewandten mit dem Strahlenleitkörper 1 in Verbindung stehenden Gehäuseoberteil 3 und einem wannenförmig ausgebildeten, den staubdichten Abschluß bildenden Gehäuseunterteil 4. Am Gehäuseoberteil 3 ist ein Trägerteil 5 festgelegt, welches zur haltenden Aufnahme von zwei Strahlensendern 6, von zwei Strahlenempfängern 7, von einem Wärmeleitblech 8 und von einer elektrischen Leiterplatte 9 vorgesehen ist. Einststückig ist desweiteren eine Gehäusekonfiguration 10 einer elektrischen Steckverbindungskupplung an das Trägerteil 5 angeformt.

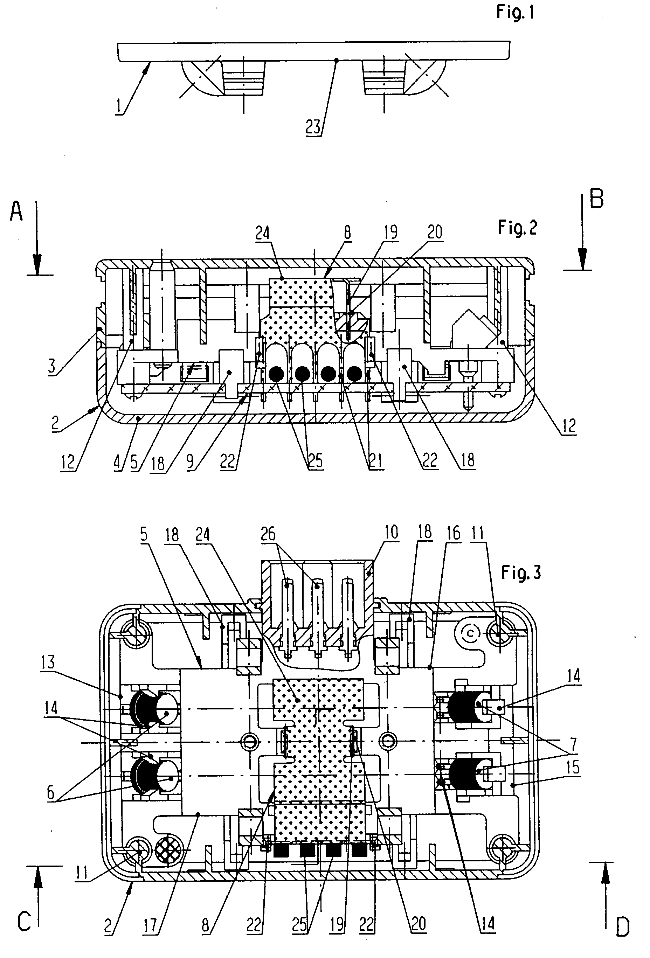

Wie insbesondere aus den Fig. 2 und 3 hervorgeht, weist das aus Kunststoff hergestellte Trägerteil 5 an seinen vier äußeren Eckbereichen jeweils eine Durchgangsbohrung 11 auf. Zur Festlegung des Trägerteiles 5 am Gehäuseoberteil 3 werden die vier Durchgangsbohrungen 11 jeweils von einem Befestigungsdom 12 durchgriffen. Die vier Befestigungsdome 12 sind an die der Scheibe abgewandte Oberfläche des Gehäuseoberteiles 3 einstückig angeformt und erstrecken sich senkrecht zum Verlauf der Scheibe in den Gehäuseinnenraum hinein.

Im Bereich einer ersten Schmalseite 13 des Trägerteiles 5 sind zwischen den beiden dieser Schmalseiten 13 zugehörigen Durchgangsbohrungen 11 Halteelemente 14 zur Aufnahme der Strahlensender 6 einstückig vorhanden. An der zweiten Schmalseite 15 sind gegenüberliegend entsprechend Halteelemente 14 für die Strahlenempfänger 7 an das Trägerteil 5 angeformt. Durch das Zusammenspiel der vier Durchgangsbohrungen 11 des Trägerteiles 5 mit den vier Befestigungsdomen 12 des Gehäuseoberteiles 3 werden die am Trägerteil 5 festgelegten Strahlensender 6 sowie Strahlenempfänger 7 dem durch Clipselemente am Gehäuseoberteil 3 festgelegten Strahlenleitkörper 1 lagegerecht zugeordnet. Die elektrischen Anschlußkontaktteile der beiden Strahlensender 6 und der beiden Srahlenempfänger 7 sind durch den Körper des Trägerteiles 5 hindurchgeführt und stehen mit zugehörigen elektrischen Leiterbahnen der elektrischen Leiterplatte 9 in Verbindung. Die elektrische Leiterplatte 9 ist dabei an der dem Strahlenleitkörper 1 abgewandten Seite des Trägerteiles 5 über jeweils zwei an jede der beiden Breitseiten 16,17 angeformte Clipsarme 18 gehalten.

In der Mitte zwischen den Strahlensendern 6 und den Strahlenempfängern 7 ist außerhalb des Strahlenganges das Wärmeleitblech 8 auf dem Trägerteil 5 positionsgerecht festgelegt. Haltebeine 19 des Wärmeleitbleches 8 greifen zu diesem Zweck in Halteschlitze 20 des Trägerteiles 5 ein. Die beiden Haltebeine 19 sind aus den parallel zur hinteren Oberfläche 23 des Strahlenleitkörpers 1 verlaufenden Hauptflächen 24 des Wärmleitbleches ausgestellt und senkrecht dazu abgebogen. Das Wärmeleitblech 8 ist im Querschnitt im wesentlichen L-förmig ausgebildet, wobei die parallel zur hinteren Oberfläche 23 des Strahlenleitkörpers 1 verlaufenden Hauptflächen 24 den ersten Schenkel bilden und der zweite Schenkel fünf parallel zueinander verlaufende Verbindungsarme 21 umfaßt. Die beiden äußeren Verbindungsarme 21 des zweiten Schenkels greifen zur Unterstützung der positionsgerechten Halterung des Wärmeleitbleches 8 jeweils in eine in der einen Breitseite 17 des Trägerteiles 5 vorhandene Haltenut 22 ein. Insgesamt weist der zweite Schenkel durch die fünf parallel zueinander verlaufenden Verbindungsarme 21 eine kammartige Form auf. Die freien Enden der Verbindungsarme 21 ragen an ihren Verbindungsstellen durch die elektrische Leiterplatte 9 hindurch und stehen dabei mit einer metallischen Leiterbahn in Verbindung. Auf der elektrischen Leiterplatte 9 sind zwischen den fünf Verbindungsstellen der Verbindungsarme 21 vier die Wärme erzeugende Heizelemente 25 angeordnet. Zur thermischen Ankoppelung an das Wärmeleitblech 8 und somit zur Bildung einer Heizvorrichtung stehen die vier Heizelemente 25 stoffschlüssig über die Leiterplatte 9 selbst und eine darin angeordnete metallische Leiterbahn mit den Verbindungsarmen 21 in Verbindung. Somit trägt sowohl die elektrische Leiterplatte 9 selbst, als auch die metallische Leiterbahn zur Übertragung von Wärme in einem großen Umfange bei. Um eine thermisch verbesserte stoffschlüssige Verbindung zu schaffen ist an den zwischen der metallischen Leiterbahn und den Verbindungsarmen 21 sowie Heizelementen 25 vorhandenen Verbindungsstellen Lot aufgebracht.

Um den von der Umgebungstemperatur abhängigen und somit unterschiedlichen Wärmebedarf der Sensoreinrichtung durch die Heizvorrichtung abdecken zu können, wird die Heizvorrichtung impulsweise bestromt. Um unterschiedliche Heizleistungen zu realisieren, wird die Umgebungstemperatur erfaßt und darauf abgestimmt das Puls-/Pausenverhältnis der Bestromung verändert. Die Heizleistung ist jedoch zusätzlich abhängig von der anliegenden Versorgungsspannung. Um auch diese Einflüsse ausgleichen zu können, wird die Höhe der Versorgungsspannung erfaßt und das Puls-/Pausenverhältnis entsprechend darauf abgestimmt.

An die der einen Breitseite 17 gegenüberliegende andere Breitseite 16 des Trägerteiles 5 ist die Gehäusekonfiguration 10 einer Steckverbindungskupplung einstückig angeformt. Die elektrischen Kontaktteile 26 der Steckverbindungskupplung stehen einerseits mit zugehörigen elektrischen Leiterbahnen der elektrischen Leiterplatte 9 in Verbindung und sind andererseits als Steckkontaktteile ausgebildet und aus dem Innenraum des Gehäuses 2 nach außen geführt. Über die elektrischen Kontaktteile 26 wird die elektrische Versorgung der elektrischen/elektronischen Bauteile der Sensoreinrichtung hergestellt. Dabei kann ein entsprechendes Gegensteckverbindungsteil direkt an die Steckverbindungskupplung des Trägerteiles 5 angeschlossen werden. Jeweils eine U-förmige Ausnehmung in der zugeordneten Seitenwand des Gehäuseoberteiles 3 und des Gehäuseunterteiles 4 umschließen die Gehäusekonfiguration 10 des Trägerteiles 5 bündig.

Das Trägerteil 5 stellt somit eine einstückige Haltevorrichtung für alle mit der elektrischen Leiterplatte 9 in Verbindung stehenden Komponenten der Sensorvorrichtung dar. Weil die Heizelemente 25 außerdem direkt auf der ebenfalls am Trägerteil 5 festgelegten elektrischen Leiterplatte 9 angeordnet sind, ist eine Baugruppe entstanden, bei der alle notwendigen stoffschlüssigen Verbindungen (verlöten) in einem automatisierten Arbeitsgang erfolgen können. Außerdem ist diese Baugruppe vor der Gesamtmontage der Sensoreinrichtung bzgl. ihrer Funktionen vorprüfbar, so daß eine kostengünstige, wenig Fehlerteile aufweisende Herstellung der Sensoreinrichtung ermöglicht ist.

Die Montage einer kompletten Sensoreinrichtung erfolgt, indem zunächst die mit einigen elektrischen/elektronischen Bauteilen vorbestückte elektrische Leiterplatte 9 an dem mit den elektrischen Kontaktteilen 26 versehenen Trägerteil 5 über die daran angeformten Clipsarme 18 festgelegt wird. Danach werden die als Dioden ausgeführten Strahlensender 6 und Strahlenempfänger 7, sowie das aus Kupfer bestehende Wärmeleitblech 8 am Trägerteil 5 festgelegt und mit der elektrischen Leiterplatte 9 in Verbindung gebracht. Durch einen automatisierten Lötprozeß werden anschließend alle der elektrischen Leiterplatte 9 zugehörigen, mit Lot zu versehenden Verbindungsstellen verlötet. Als nächstes wird das Trägerteil 5 mitsamt der elektrischen Leiterplatte 9 am Gehäuseoberteil 3 befestigt. Dabei können zur Befestigung, nachdem die Befestigungsdome 12 die Durchgangsbohrungen 11 durchgriffen haben, die freien Enden der Befestigungsdome 12 mit einer Schraube versehen werden. Auch ist analog eine Befestigung des Trägerteiles 5 selbstverständlich möglich, indem die freien Enden der Befestigungsdome 12 warm verstemmt werden. Nun wird zur staubdichten Abdeckung das Gehäuseunterteil 4 auf das Gehäuseoberteil 3 aufgeclipst. Zuletzt wird das derart bestückte Gehäuse 2 auf den vorher an die Scheibe angekoppelten Strahlenleitkörper 1 aufgebracht und durch Verclipsen festgelegt.

## Patentansprüche

1. Optoelektronische Sensoreinrichtung zur Erfassung des Benetzungsgrades einer vorzugsweise aus Glas bestehenden transparenten Scheibe mit insbesondere tropfenförmigem Niederschlag, wobei an die nicht dem Niederschlag ausgesetzte innere Oberfläche der Scheibe im Bereich des von einer motorisch betriebenen Scheibenwischeinrichtung erfaßten Wischfeldes die vordere Oberfläche von einem unter dem Einfluß einer Heizvorrichtung stehenden Strahlenleitkörper (1) angekoppelt ist, dem in räumlicher Trennung voneinander zumindest ein Strahlensender (6) und zumindest ein Strahlenempfänger (7) über ein im Innenraum des Gehäuses (2) festgelegtes Trägerteil (5) derart zugeordnet sind, daß von dem Strahlensender (6) emittierte Strahlen in Abhängigkeit von dem auf der Scheibe befindlichen Niederschlag reflektiert und zu dem Strahlenempfänger (7) geleitet werden, der jeweils ein von der zugeordneten Niederschlagsmenge abhängiges Signal liefert, wobei an der dem Strahlenleitkörper (1) abgewandten Seite des Trägerteiles (5) eine elektrische Leiterplatte (9) befestigt ist, die mit dem zur elektrischen Verbindung notwendigen Anschlußkontaktteilen des Strahlensenders (6), des Strahlenempfängers (7) und der Heizvorrichtung in Verbindung steht, **dadurch gekennzeichnet,** daß die Heizvorrichtung zumindest ein am Trägerteil (5) festgelegtes Wärmeleitblech (8) umfaßt, welches mit seinen wesentlichen Hauptflächen (24) dem Strahlenleitkörper (1) zugeordnet ist, sowie mit zumindest einem angeformten Verbindungsarm (21) mit der elektrischen Leiterplatte (9) in Verbindung steht, und daß die Heizvorrichtung außerdem zumindest ein die notwendige Wärme erzeugendes Heizelement (25) umfaßt, das in der Nähe eines Verbindungsarmes (21) direkt auf der elektrischen Leiterplatte (9) angeordnet und zur Einkoppelung der Wärme in das Wärmeleitblech (8) zumindest stoffschlüssig mit einem zugeordneten Verbindungsarm (21) verbunden ist.

2. Sensoreinrichtung nach Anspruch 1, dadurch gekennzeichnet, daß die Heizvorrichtung aus einem einzigen Wärmeleitblech (8) und einem einzigen Heizelement (25) besteht.

3. Sensoreinrichtung nach Anspruch 1, dadurch gekennzeichnet, daß die Heizvorrichtung aus einem einzigen Wärmeleitblech (8) und mehreren Heizelementen (25) besteht.

4. Sensoreinrichtung nach einem der Ansprüche 1 bis 3, dadurch gekennzeichnet, daß das Wärmeleitblech (8) zur Einkoppelung der Wärme einen einzigen Verbindungsarm (21) aufweist.

5. Sensoreinrichtung nach einem der Ansprüche 1 bis 3, dadurch gekennzeichnet, daß das Wärmeleitblech (8) zur Einkoppelung der Wärme mehrere Verbindungsarme (21) aufweist.

6. Sensoreinrichtung nach Anspruch 5, dadurch gekennzeichnet, daß die Verbindungsarme (21) an eine der Seitenflächen des Wärmeleitbleches (8) einstückig angeformt und kammartig angeordnet sind.

7. Sensoreinrichtung nach einem der Ansprüche 2 bis 6, dadurch gekennzeichnet, daß das Wärmeleitblech (8) im Querschnitt im wesentlichen L-förmig ausgebildet ist, wobei die Hauptflächen (24) des Wärmeleitbleches (8) parallel zur hinteren Oberfläche (23) des Strahlenleitkörpers (1) verlaufend angeordnet sind und jeder Verbindungsarm (21) senkrecht zu den Hauptflächen (24) verlaufend angeordnet ist.

8. Sensoreinrichtung nach einem der Ansprüche 1 bis 7, dadurch gekennzeichnet, daß parallel zu mindest einem Verbindungsarm (21) ein Federarm aus dem Wärmeleitblech (8) ausgestellt ist, der mit seinem freien Endbereich direkt mit einem Heizelement (25) in Verbindung steht.

9. Sensoreinrichtung nach einem der Ansprüche 1 bis 8, dadurch gekennzeichnet, daß die für die thermische Übertragung vorgesehene stoffschlüssige Verbindung zwischen dem zumindest einem Heizelement (25) und dem Wärmeleitblech (8) über die Leiterplatte (9) selbst und über eine in der Leiterplatte (9) vorhandene metallische Leiterbahn erfolgt, wobei jede für eine elektrische oder eine thermische Verbindung notwendige Verbindungsstelle mit Lot beaufschlagt ist.

10. Sensoreinrichtung nach einem der Ansprüche 1 bis 9, dadurch gekennzeichnet, daß zur Verbesserung der thermischen Übertragung zumindest ein Heizelement (25) über zumindest eine Lotstrecke mit zumindest einem Verbindungsarm (21) des Wärmeleitbleches (8) direkt in Verbindung steht.

11. Sensoreinrichtung nach einem der Ansprüche 1 bis 10, dadurch gekennzeichnet, daß jedes Heizelement (25) als selbstregelndes Kaltleiterelement ausgebildet ist.

12. Sensoreinrichtung nach einem der Ansprüche 1 bis 10, dadurch gekennzeichnet, daß jedes Heizelement (25) als Festwiderstand ausgebildet ist, der je nach Bedarf unterschiedlich bestromt wird.

13. Sensoreinrichtung nach einem der Ansprüche 1 bis 12, dadurch gekennzeichnet, daß die Zuleitung der Versorgungsspannung für die elektrischen und elektronischen Bauteile der Sensoreinrichtung über eine dem Trägerteil (5) zugeordnete Steckverbindungskupplung erfolgt, dessen elektrische Kontaktteile (26) einerseits direkt mit zugehörigen elektrischen Leiterbahnen der elektrischen Leiterplatte (9) in Verbindung stehen und die andererseits zum Anschluß eines Gegensteckverbindungsteiles aus dem Innenraum des Gehäuses (2) nach außen geführt sind.

14. Sensoreinrichtung nach Anspruch 13, dadurch gekennzeichnet, daß die Gehäusekonfiguration (10) der Steckverbindungskupplung einstückiger Bestandteil des Trägerteiles (5) ist.

15. Sensoreinrichtung nach einem der Ansprüche 1 bis 12, dadurch gekennzeichnet, daß die Zuleitung der Versorgungsspannung für die elektrischen und elektronischen Bauteile der Sensoreinrichtung über eine elektrische Leitung erfolgt, deren elektrische Leiter einerseits direkt mit den der elektrischen Leiterplatte (9) zugehörigen elektrischen Leiterbahnen in Verbindung stehen und die außerhalb des Gehäuses (2) andererseits einer Steckverbindungskupplung zugeordnet sind.

## Claims

1. Optoelectronic sensor device for registering the degree of wetting on a transparent screen made preferably of glass, in particular by way of precipitation in drop form, whereby the front surface of a beam conducting unit (1), which is under the influence of a heating facility, is coupled in the vicinity of the area wiped by a motor-driven windscreen wiper installation to the inner surface of the screen which is not subjected to precipitation, and at least one beam transmitter (6) and at least one beam receiver (7) which are spacially separated are assigned by way of a bearer element (5) positioned in the inner cavity of the housing (2) to correspond to the said beam conducting unit (1) in such a way that the beams emitted by the beam transmitter (6) reflect in dependence on the precipitation prevailing on the screen and are conducted to the beam receiver (7) which emits a signal which depends on the ascertained amount of precipitation, whereby an electric printed circuit board (9) is secured to the side of the bearer element (5) facing away from the beam conducting unit (1) and is connected to the connecting contact components of the beam transmitter (6), the beam receiver (7) and the heating facility, as necessary to establish the electrical connection,
**characterized by the fact that** the heating facility incorporates at least one heat conducting plate (8) which is attached to the bearer element (5), and the essential main planes (24) of which correspond to the beam conducting unit (1) and which is also connected to the electric printed circuit board (9) with at least one integrally formed connecting arm (21), and that the heating facility also incorporates at least one heating element (25) which generates the required heat and is arranged in the vicinity of a connecting arm (21) directly on the electric printed circuit board (9) and is connected at least by way of supplementary material with a corresponding connecting arm (21) for the purpose of coupling the heat into the heat conducting plate (8).

2. Sensor device in accordance with claim 1, characterized by the fact that the heating facility comprises a single heat conducting plate (8) and a single heating element (25).

3. Sensor device in accordance with claim 1, characterized by the fact that the heating facility comprises a single heat conducting plate (8) and several heating elements (25).

4. Sensor device in accordance with one of claims 1 to 3, characterized by the fact that the heat conducting plate (8) features a single connecting arm (21) for coupling in the heat.

5. Sensor device in accordance with one of claims 1 to 3, characterized by the fact that the heat conducting plate (8) features several connecting arms (21) for coupling in the heat.

6. Sensor device in accordance with claim 5, characterized by the fact that the connecting arms (21) are formed in a one-piece construction onto one of the side surfaces of the heat conducting plate (8) and arranged in a comb-like fashion.

7. Sensor device in accordance with one of claims 2 to 6, characterized by the fact that the cross-section of the heat conducting plate (8) is essentially formed in in the shape of an L, whereby the main planes (24) of the heat conducting plate (8) are arranged to run parallel to the rear surface (23) of the beam conducting unit (1) and each of the connecting arms (21) is arranged to run vertically to the main planes (24).

8. Sensor device in accordance with one of claims 1 to 7, characterized by the fact that a resilient arm projects from the heat conducting plate (8) parallel to at least one connecting arm (21) and connects with its free end zone directly with a heating element (25).

9. Sensor device in accordance with one of Claims 1 to 8, characterized by the fact that the joint by way of supplementary material intended for the purpose of thermal transmission between at least one heating element (25) and the heat conducting plate (8) occurs by way of the printed circuit board (9) itself and by way of a metal conductor strip in the printed circuit board (9), whereby each connecting point necessary for an electrical or a thermal connection is supplemented with solder.

10. Sensor device in accordance with one of Claims 1 to 9, characterized by the fact that at least one heating element (25) is connected directly with at least one connecting arm (21) of the heat conducting plate (8) by way of at least one soldering path for the purpose of improving the thermal transmission.

11. Sensor device in accordance with one of Claims 1 to 10, characterized by the fact that each heating element (25) is constructed as a self-regulation PTC-resistor element.

12. Sensor device in accordance with one of claims 1 to 10, characterized by the fact that each heating element (25) is constructed as a fixed resistor which can be variably powered to suit the demand.

13. Sensor device in accordance with one of claims 1 to 12, characterized by the fact that the supply voltage feed line for the electric and electronic components of the sensor device is established by way of a plug-type connecting coupling which is allocated to the bearer element (5), and the electric contact components (26) of which are connected on the one hand directly with corresponding electric conductor strips on the electric printed circuit board (9) and on the other hand lead out from the interior space of the housing (2) to form a connection with a counter-plug connecting part.

14. Sensor device in accordance with claim 13, characterized by the fact that the housing configuration (10) of the plug-type connecting coupling is a one-piece element of the bearer element (5).

15. Sensor device in accordance with one of claims 1 to 12, characterized by the fact that the feed line of the supply voltage for the electric and electronic components of the sensor device is effected by way of an electric line, the electric conductor of which is connected on the one hand directly with the electric conductor strips appertaining to the electric printed circuit board (9) and which on the other hand is allocated outside the housing (2) to a plug-type connecting coupling.

## Revendications

1. Dispositif sensoriel pour la détection du degré d'humidité d'une glace transparente, préférentiellement en verre, à la suite d'une précipitation en forme de gouttes, la surface antérieure d'un corps conducteur de rayons (1), soumis à l'influence d'un dispositif de chauffage, étant couplé à la surface intérieure de la glace, non soumise à la précipitation, dans la zone balayée par un essuie-glace entrainé par un moteur, un émetteur de rayons (6) et un récepteur de rayons (7), au moins, séparés dans l'espace l'un de l'autre, étant subordonnés au corps conducteur de rayons (1) par l'intermédiaire d'un support (5) fixé à l'intérieur du boîtier (2) de sorte que les rayons émis par l'émetteur de rayons (6) soient réflectés en dépendance de la précipitation mouillant la glace et conduits au récepteur de rayons (7) qui lance un signal en fonction de la quantité de précipitation, une plaque de conduction électrique (9), raccordée aux pièces de contact électriques de l'émetteur de rayons (6), du récepteur de rayons (7) et du dispositif de chauffage, **caractérisé en ce que** le dispositif de chauffage comprend au moins une tôle conductrice de chaleur (8) qui est fixée au support (5) et dont les surfaces essentielles (24) sont subordonnées au corps conducteur de rayons (1) et dont un bras de raccordement (21), formé à partir d'elle, est raccordé à la plaque de conduction électrique (9)
**et que** le dispositif de chauffage comprend, en outre, au moins un élément de chauffage (25) fournissant la chaleur nécessaire, lequel est disposé directement sur la plaque de conduction électrique (9) à proximité d'un bras de raccordement (21) et est relié, au moins par brasure, à un bras de raccordement (21) afin que la chaleur soit conduite dans la tôle conductrice de chaleur (8).

2. Dispositif sensoriel selon la revendication 1, **caractérisé en ce que** le dispositif de chauffage consiste en une seule tôle conductrice de chaleur (8) et un seul élément de chauffage (25).

3. Dispositif sensoriel selon la revendication 1, **caractérisé en ce que** le dispositif de chauffage consiste en une seule tôle conductrice de chaleur (8) et en plusieurs éléments de chauffage (25).

4. Dispositif sensoriel selon l'une des revendications 1 à 3, **caractérisé en ce que** la tôle conductrice de chaleur (8) présente un seul bras de raccordement (21) pour le transfert de la chaleur.

5. Dispositif sensoriel selon l'une des revendications 1 à 3, **caractérisé en ce que** la tôle conductrice de chaleur (8) présente plusieurs bras de raccordement (21) pour le transfert de la chaleur.

6. Dispositif sensoriel selon la revendication 5, **caractérisé en ce que** les bras de raccordement (21) sont formés d'une pièce à partir de l'une des surfaces latérales de la tôle conductrice de chaleur (8) et disposés en forme de peigne.

7. Dispositif sensoriel selon l'une des revendications 2 à 6, **caractérisé en ce que** la tôle conductrice de chaleur (8) présente une section transversale essentiellement en forme de "L", les principales surfaces (24) de la tôle conductrice de chaleur (8) s'étendant parallèlement à la surface postérieure (23) du corps conducteur de rayons (1) et chaque bras de raccordement (21) étant disposé perpendiculairement par rapport aux surfaces principales (24).

8. Dispositif sensoriel selon l'une des revendications 1 à 7, **caractérisé en ce que** un bras fait saillie hors de la tôle conductrice de chaleur (8), parallèlement à, au moins, un bras de raccordement (21), et est raccordé directement, par son extrémité libre, à un élément de chauffage (25).

9. Dispositif sensoriel selon l'une des revendications 1 à 8, **caractérisé en ce que** la brasure, prévue pour le transfert thermique est prévue, tout au moins, entre un élément de chauffage (25) et la tôle conductrice de chaleur (8), par l'intermédiaire de la plaque de conduction électrique (9), elle-même, et par l'intermédiaire d'une voie de conduction métallique prévue dans la plaque de conduction électrique (9), chacun des points de raccordement électriques ou thermiques pourvu d'une brasure.

10. Dispositif sensoriel selon l'une des revendications 1 à 9, **caractérisé en ce que**, pour améliorer le transfert thermique, un élément de chauffage (25), au moins, est raccordé directement à, au moins, un bras de raccordement (21) de la tôle conductrice de chaleur (8) par, au moins, une brasure.

11. Dispositif sensoriel selon l'une des revendications 1 à 10, **caractérisé en ce que** chaque élément de chauffage (25) est conçu sous forme d'élément

12. Dispositif sensoriel selon l'une des revendications 1 à 10, **caractérisé en ce que** chaque élément de chauffage (25) est conçu sous forme de résistance fixe pouvant être alimentée différemment en courant selon les besoins.

13. Dispositif sensoriel selon l'une des revendications 1 à 12, **caractérisé en ce que** l'alimentation en tension des éléments électriques et électroniques du dispositif sensoriel se fait par l'intermédiaire d'une connexion à fiches subordonnée au support (5) et dont les pièces de contact électriques (26) , d'une part, sont raccordées directement aux voies conductrices électriques correspondantes de la plaque de conduction électrique (9) et, d'autre part, sont conduites à l'extérieur du boîtier (2) pour permettre le raccordement d'une contre-pièce.

14. Dispositif sensoriel selon la revendication 13, **caractérisé en ce que** la configuration (10) du couplage à fiches fait partie inhérente du support (5).

15. Dispositif sensoriel selon l'une des revendications 1 à 12, **caractérisé en ce que** l'alimentation en tension des éléments électriques et électroniques du dispositif sensoriel se fait par l'intermédiaire d'une conduite électrique dont les conducteurs, d'une part, sont reliés directement aux voies conductrices électriques correspondantes de la plaque de conduction électrique (9) et, d'autre part, sont coordonnés, hors du boîtier (2) à un couplage à fiches.
